# EUROPÄISCHE PATENTSCHRIFT

(11) **EP 2 882 614 B1**
(45) Veröffentlichungstag und Bekanntmachung des Hinweises auf die Patenterteilung: **22.03.2017**
(21) Anmeldenummer: 13745355.1
(22) Anmeldetag: 03.08.2013
(51) Int. Cl.: B60R 7/04

(54) **EINRICHTUNG ZUR ANORDNUNG EINER WARNWESTENEINRICHTUNG AN EINER SEITENTÜR EINES KRAFTWAGENS**
ARRANGEMENT FOR THE STORAGE OF A REFLECTIVE VEST ON A SIDE DOOR OF A VEHICLE
AGENCEMENT POUR LA FIXATION D'UN GILET DE SÉCURITÉ À LA PORTIÈRE D'UN VÉHICULE AUTOMOBILE

(30) Priorität: 10.08.2012 DE 102012016010
(43) Veröffentlichungstag der Anmeldung: 17.06.2015
(73) Patentinhaber: Daimler AG, 70327 Stuttgart (DE)
(72) Erfinder: PLOCHER, Bernd, 72108 Rottenburg (DE); ECKLE, Leif, 75446 Wiernsheim (DE); TEUBERT, Almar, 71149 Bondorf (DE); HOLDER, Klaus, 71384 Weinstadt (DE); FRIEDRICH, Andreas, 75242 Neuhausen (DE); KUONATH, Klaus, 75365 Calw (DE); BÖHMLER, Patrick, 71032 Böblingen (DE)
(74) Vertreter: JENSEN & SON
(86) Internationale Anmeldenummer: PCT/EP2013/002330
(87) Internationale Veröffentlichungsnummer: WO 2014/023412

(56) Entgegenhaltungen:
- WO-A1-2006/113870
- WO-A1-2011/107212
- WO-A2-2005/099402
- FR-A1- 2 943 292
- JP-A- 2000 219 073
- JP-A- 2005 306 341
- JP-U- S62 203 754
- US-A- 1 694 060
- US-B1- 7 032 945

## Beschreibung

Die Erfindung betrifft eine Seitentür eines Kraftwagens mit einer Einrichtung zur Anordnung einer Warnwesteneinrichtung und einem Aufnahmeelement zur wenigstens bereichsweisen Aufnahme einer Warnweste.

Eine derartige Seitentür ist aus WO 2001/107212 A1 bekannt und umfasst ein als Türverkleidung ausgebildetes Fahrzeuginnenausstattungsteil. Hierbei weist die Türverkleidung ein mit dem Türrohbau verbundenes Trägerelement, ein Absorptionselement zur Energieaufnahme im Falle eines Unfalls sowie ein Abdeck- und/oder Befestigungselement auf. An dem Abdeck- und/oder Befestigungselement ist eine Öffnung vorgesehen, um Zugang zu einem in der Türverkleidung integrierten Ablagefach zu haben. In dem Ablagefach ist eine Warnweste untergebracht.

Kommt es während der Fahrt mit einem Kraftwagen zu einer Panne oder zu einem Unfall, in deren oder in dessen Folge wenigstens eine Person den Kraftwagen verlassen muss, so gewährleistet das Tragen einer Warnweste eine sehr hohe Sicherheit für die sich außerhalb des Kraftwagens in Fahrbahnnähe bewegende Person. Warnwesten sind beispielsweise entsprechend der europäischen Norm EN 471 farblich leuchtend gestaltet, so dass die die Warnweste tragende Person von anderen Verkehrsteilnehmern besonders gut gesehen werden kann. Dadurch können Folgeunfälle vermieden werden.

Das Tragen einer solchen Warnweste wird zunehmend durch gesetzliche Vorschriften zur Pflicht für den Kraftwagen verlassende und sich in Fahrbahnnähe aufhaltende Personen. Dabei soll die Warnweste bereits beim Aussteigen angelegt sein. Damit die aus dem Kraftwagen aussteigende Person dieser Pflicht komfortabel nachkommen kann, ist eine entsprechende Unterbringung der Warnweste und insbesondere eine entsprechende Handhabung dieser zu schaffen.

Die FR 2 931 745 A1 offenbart eine Anordnung einer Warnwesteneinrichtung an einem Fahrzeugsitz eines Kraftwagens, bei welcher die Warnwesteneinrichtung ein Behältnis sowie eine in dem Behältnis aufgenommene Warnweste umfasst. Das Behältnis ist dabei in einem Verstauraum eines Sitzteils des Fahrzeugsitzes teilweise angeordnet. Die Warnweste kann über eine Öffnung des Behältnisses aus diesem entnommen werden.

Der EP 1 733 923 A1 ist ein Staubehälter mit einer Warnweste als bekannt zu entnehmen. Der Staubehälter weist ein zylinderförmiges, an einer Seite mit einem Boden abgeschlossenes Rohr und einem mit dem Rohr verbundenen, die Öffnung des Rohres verschließenden und abnehmbaren Deckel auf. Die Warnweste befindet sich dabei in einem zusammengerollten Zustand zumindest teilweise innerhalb des Rohres. Der Staubehälter kann in einem korrespondierenden Stauraum einer Mittelkonsole verstaut werden.

Darüber hinaus ist aus der DE 10 2006 036 030 A1 eine Unterbringung einer Warnweste in einem Kraftfahrzeug bekannt, wobei die Warnweste an einem Gurtband eines Sicherheitsgurtes angebracht ist.

Die DE 10 2009 039 380 A1 offenbart eine Einrichtung zur Anordnung einer wenigstens eine Warnweste umfassenden Warnwesteneinrichtung an einer Seitentür eines Kraftwagens. Die Warnwesteneinrichtung umfasst dabei wenigstens ein die Warnweste zumindest bereichsweise umgebendes Aufnahmeelement, welches als die Warnweste allumfangsseitig umgebender Staubehälter ausgebildet ist. Die Einrichtung umfasst eine Seitenablage einer Innenverkleidung der Seitentür. Dabei kann die Warnweste über den Staubehälter in der Seitenablage untergebracht und so an der Seitentür angeordnet werden.

Die bekannte Einrichtung zur Anordnung der Warnwesteneinrichtung an der Seitentür weist dabei eine verbesserungswürdige Handhabung auf, so dass ein Fahrzeuginsasse des Kraftwagens die Warnweste einfacher und komfortabler anlegen sowie verstauen kann.

Es ist daher Aufgabe der vorliegenden Erfindung, eine Seitentür eines Kraftwagens der eingangs genannten Art mit einer Einrichtung zur Anordnung einer Warnwesteneinrichtung derart weiterzuentwickeln, dass die Warnwesteneinrichtung besonders einfach gehandhabt werden kann.

Diese Aufgabe wird gelöst durch eine Seitentür eines Kraftwagens mit den Merkmalen des Patentanspruchs 1 in seiner Gesamtheit. Vorteilhafte Ausgestaltungen der Erfindung sind Gegenstände der Unteransprüche.

Um eine Einrichtung zur Anordnung einer Warnwesteneinrichtung an einer Seitentür eines Kraftwagens, insbesondere eines Personenkraftwagens zu schaffen, welche eine besonders einfache Handhabung aufweist, ist bei einem ersten Aspekt der Erfindung vorgesehen, dass an der Seitentür wenigstens ein erstes Befestigungsmittel der Einrichtung vorgesehen ist, an welchem die Warnwesteneinrichtung unter Zusammenwirken des ersten Befestigungsmittels mit wenigstens einem zweiten Befestigungsmittel, das an einem zur Aufnahme wenigstens einer Warnweste dienenden Aufnahmeelement vorgesehen ist, befestigbar ist. Das Aufnahmeelement kann dabei die wenigstens eine Warnweste ganz oder teilweise umfassen oder umgeben. Die Befestigungsmittel gewährleisten eine definierte Verbindung der Warnwesteneinrichtung mit der Seitentür, welche für einen Fahrzeuginsassen des Kraftwagens auf einfache Weise und ergonomisch herzustellen und zu lösen ist. Insbesondere kann so eine standardisierte Befestigung bzw. Befestigbarkeit der Warnwesteneinrichtung an der Seitentür geschaffen werden, was der Handhabung zu Gute kommt.

In vorteilhafter Ausgestaltung der Erfindung ist die Warnwesteneinrichtung durch die miteinander zusammenwirkenden Befestigungsmittel formschlüssig an der Seitentür befestigbar bzw. befestigt. Hierdurch ist eine klapperfreie und feste Verbindung geschaffen. Die Befestigung der Warnwesteneinrichtung an der Seitentür weist auch eine sehr hohe Unfallsicherheit auf, da die Gefahr, dass sich die Warnwesteneinrichtung von der Seitentür löst, besonders gering ist.

Durch die Befestigungsmittel und insbesondere durch die formschlüssige Verbindung kann auch eine haptische Rückmeldung an eine die Warnwesteneinrichtung an der Seitentür befestigende Person realisiert werden, so dass der Person dadurch mitgeteilt wird, dass die Warnwesteneinrichtung fest und sicher an der Seitentür befestigt ist.

Hierbei ist durch das Zusammenwirken der Befestigungsmittel beispielsweise eine Rastverbindung geschaffen. Wird das aufnahmeelementseitige, zweite Befestigungsmittel in eine vorgebbare Relativposition zum türseitigen, ersten Befestigungsmittel bewegt, so rasten die Befestigungsmittel gegenseitig ein, wodurch der Person eine akustische und insbesondere haptische (spürbare) Rückmeldung der festen Verbindung der Warnwesteneinrichtung mit der Seitentür rückgemeldet wird.

Die Befestigungsmittel ermöglichen dabei sowohl ein ergonomisches und einfaches Lösen der Warnwesteneinrichtung von der Seitentür als auch ein einfaches und ergonomisches Befestigen dieser an der Seitentür. Das Lösen und Befestigen kann mit der von der Seitentür entfernten Hand des neben der Seitentür sitzenden Fahrzeuginsassen erfolgen. Dadurch kann vermieden werden, dass sich der Fahrzeuginsasse umständlich und unergonomisch auf dem Fahrzeugsitz bewegen muss, um die Warnwesteneinrichtung zu erreichen. Im Gegensatz dazu kann er die Warnwesteneinrichtung auf einfache Weise durch ein Um-Sich-Herum-Greifen mit der zur Seitentür ferneren Hand erreichen.

Zur Realisierung einer definierten Anordnung und Ausrichtung der Warnwesteneinrichtung an und relativ zur Seitentür ist bei einer weiteren Ausführungsform der Erfindung vorgesehen, dass eines der Befestigungsmittel eine Führung aufweist, in welche das andere Befestigungsmittel in eine Einschubrichtung einschiebbar ist.

Als weiterhin vorteilhaft hat es sich gezeigt, wenn sich die Führung in Einschubrichtung verjüngt. Mit anderen Worten weist die Führung einen Querschnitt auf, welcher sich in Einschubrichtung verkleinert. Dadurch ist es möglich, die Warnwesteneinrichtung zunächst in einem Bereich der Führung, in welchem sie noch einen relativ großen Querschnitt aufweist, vorzupositionieren. Im Anschluss an das Vorpositionieren kann die Warnwesteneinrichtung entlang der Führung in Einschubrichtung verschoben werden. Durch den sich in Einschubrichtung verkleinernden Querschnitt wird die Warnwesteneinrichtung definiert geführt und relativ zur Seitentür ausgerichtet, so dass sie eine definierte und vorgebbare Verstauposition einnimmt. Diese Verstauposition ist dabei aufgrund der Führung und der exakten Positionierung auch bei mehrmaligem Lösen und Befestigen der Warnwesteneinrichtung stets zumindest im Wesentlichen gleich.

Durch die sich verjüngende Führung ist somit eine selbstfindende Befestigung realisiert, bei welcher die Person die Warnwesteneinrichtung auf einfache Weise und ergonomisch entlang der Führung verschiebt, wodurch die Warnwesteneinrichtung selbsttätig bzw. selbstfindend in ihre Verstauposition verbracht wird.

Auf ebenso einfache Weise kann die Warnwesteneinrichtung von der Seitentür gelöst werden. Hierzu wird die Warnwesteneinrichtung entgegen der Einschubrichtung herausgezogen. Aufgrund der sich entgegen der Einschubrichtung erweiternden Führung kann auch ein Verklemmen und Verkanten der Warnwesteneinrichtung beim Einschieben oder beim Herausziehen vermieden werden.

Zur Realisierung einer besonders einfachen Handhabung auch bei dunklen Umgebungsbedingungen im Fahrgastraum des Kraftwagens ist an dem Aufnahmeelement wenigstens eine Handhabe angeordnet, mittels welcher das aufnahmeelementseitige, zweite Befestigungsmittel relativ zum türseitigen, ersten Befestigungsmittel in und außer Wirkverbindung mit diesem bewegbar ist. Die Handhabe ist sehr gut durch einen Fahrzeuginsassen vom Fahrgastraum aus ertastbar, so dass er die Warnweste auch dann auffinden und anlegen kann, wenn er die Warnwesteneinrichtung aufgrund schlechter Lichtverhältnisse nicht genau sieht.

Vorzugsweise ist die Handhabe ergonomisch ausgebildet, so dass ein besonders komfortables Lösen und Befestigen der Warnwesteneinrichtung gewährleistet ist. Hierzu ist die Handhabe vorzugsweise an zwei voneinander beabstandeten Enden der Handhabe an dem Aufnahmeelement befestigt. Dadurch kann der Fahrzeuginsasse die Handhabe fest umgreifen.

Bei einer weiteren Ausführungsform der Erfindung ist vorgesehen, dass die Warnweste durch das Aufnahmeelement kompaktiert gehalten ist. Dadurch weist die Warnwesteneinrichtung einen nur sehr geringen Bauraumbedarf auf.

Vorzugsweise ist die Warnweste zusammengerollt und durch das Aufnahmeelement zusammengerollt gehalten. Dadurch kann ein Falten und eine daraus resultierende Bruchgefahr der Warnweste vermieden werden. Gleichzeitig weist die Warnweste einen nur sehr geringen Bauraumbedarf auf.

Die Warnwesteneinrichtung kann an einem Türinnenverkleidungsteil, insbesondere an einer Armlehne des Türinnenverkleidungsteils, der Seitentür befestigt sein. Dadurch ist der Warnwesteneinrichtung eine definierte Position zugeordnet.

In weiterer, besonders vorteilhafter Ausgestaltung der Erfindung ist ein einen Stauraum eines Staufachs der Seitentür in Fahrzeughochrichtung nach unten hin begrenzender Boden des Staufachs im an der Seitentür angeordneten Zustand der Warnwesteneinrichtung in Fahrzeughochrichtung nach oben zumindest teilweise durch die in Fahrzeughochrichtung nach oben von dem Boden beabstandet angeordnete Warnwesteneinrichtung überdeckt. Die Warnwesteneinrichtung ist dabei sehr gut erreichbar. Gleichzeitig wird der Stauraum des Staufachs nicht durch die Warnwesteneinrichtung beeinträchtigt.

Die Warnwesteneinrichtung kann hierbei hängend an dem Türinnenverkleidungsteil, insbesondere an der Armlehne des Türinnenverkleidungsteils, der Seitentür befestigt sein. Dadurch wird der Stauraum des Staufaches aufgrund der hängenden Positionierung nicht beeinträchtigt.

Als weiterhin vorteilhaft hat es sich gezeigt, wenn die Warnwesteneinrichtung in ihrem an der Seitentür angeordneten bzw. befestigten Zustand in Fahrzeugquerrichtung nach innen hin zumindest teilweise durch eine Seitenwand des Staufachs überdeckt ist. Die Warnwesteneinrichtung ist somit durch Fahrzeuginsassen zumindest teilweise nicht sichtbar, was dem optischen Eindruck der Seitentür zu Gute kommt. Darüber hinaus kann die Seitenwand die Warnwesteneinrichtung zurückhalten, so dass diese sich nicht unkontrolliert im Fahrgastraum umherbewegen kann. Die Warnwesteneinrichtung ist dabei beispielsweise über eine Öffnung in Fahrzeuglängsrichtung insbesondere von vorne zugänglich und kann über die Öffnung relativ zur Seitentür bewegt und von dieser gelöst oder an dieser befestigt werden.

Vorteilhafterweise überragt die Warnwesteneinrichtung die Seitenwand in Fahrzeuglängsrichtung, so dass beispielsweise die Handhabe aus dem Staufach herausschaut und sehr gut von einem Fahrzeuginsassen ertastet und/oder gesehen werden kann. Der überwiegende Teil der Warnwesteneinrichtung wird hierbei jedoch von der Seitenwand überdeckt, so dass die Warnwesteneinrichtung den optischen Eindruck des Fahrgastraums nicht beeinträchtigt. Dabei kann beispielsweise vorgesehen sein, dass die Handhabe an ein Innenraumdesign des Fahrgastraums angepasst ist. Die zumindest teilweise sichtbare Handhabe ist somit hinsichtlich des Designs optisch ansprechend in den Fahrgastraum eingegliedert.

Bei einem zweiten Aspekt der Erfindung ist zur Realisierung einer besonders guten Handhabung der Warnwesteneinrichtung vorgesehen, dass an dem Aufnahmeelement wenigstens eine Handhabe angeordnet ist, mittels welcher die Warnwesteneinrichtung relativ zu wenigstens einem türseitigen Befestigungsmittel zum Befestigen der Warnwesteneinrichtung an der Einrichtung in und außer Wirkverbindung mit dem türseitigen Befestigungsmittel bewegbar ist. Dabei ist beispielsweise das aufnahmeelementseitige Befestigungsmittel relativ zum türseitigen Befestigungsmittel in und außer Wirkverbindung mit diesem bewegbar. Über die Handhabe, welcher ein Griff der Warnwesteneinrichtung ist, kann die Warnwesteneinrichtung besonders einfach und ergonomisch relativ zur Seitentür bewegt und somit an dieser befestigt oder von dieser gelöst werden. Vorteilhafte Ausgestaltungen des ersten Aspekts der Erfindung sind als vorteilhafte Ausgestaltungen des zweiten Aspekts der Erfindung anzusehen und umgekehrt.
Die Handhabe ermöglicht es auch, dass ein Fahrzeuginsasse die Warnwesteneinrichtung auch bei schlechten Lichtverhältnissen und beispielsweise bei Dunkelheit ertasten und die Warnweste anlegen kann, ohne dass der Fahrzeuginsasse die Warnweste genau sehen kann. Um die Handhabe auch bei schlechten Lichtverhältnissen erkennen zu können, ist diese vorzugsweise mit einem Leuchtmittel und/oder mit einer fluoreszierenden Markierung versehen.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Fig. alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Seitenansicht einer hinteren Seitentür eines Personenkraftwagens von innen sowie eine Einrichtung zur Anordnung einer Warnwesteneinrichtung mit einer Warnweste und mit einem die Warnweste zumindest bereichsweise umgebenden Aufnahmeelement an der hinteren Seitentür, wobei die Warnwesteneinrichtung über ein an der Seitentür vorgesehenes erstes Befestigungsmittel der Einrichtung und über ein an dem Aufnahmeelement vorgesehenes, zweites Befestigungsmittel der Einrichtung an der hinteren Seitentür befestigt ist;
- Fig. 2: ausschnittsweise eine schematische und vergrößert dargestellte Perspektivansicht der hinteren Seitentür;
- Fig. 3: eine schematische Seitenansicht einer vorderen Seitentür des Personenkraftwagens von innen, wobei an der vorderen Seitentür eine Warnwesteneinrichtung befestigt ist;
- Fig. 4: ausschnittsweise eine schematische und vergrößerte Perspektivansicht der vorderen Seitentür;
- Fig. 5: ausschnittsweise eine schematische Perspektivansicht der vorderen Seitentür;
- Fig. 6: ausschnittsweise eine schematische Perspektivansicht der hinteren Seitentür;
- Fig. 7: eine schematische Seitenansicht der Warnwesteneinrichtung;
- Fig. 8: eine schematische Perspektivansicht der Warnwesteneinrichtung;
- Fig. 9: eine weitere schematische Perspektivansicht der Warnwesteneinrichtung;
- Fig. 10: eine schematische Darstellung eines Fahrgastraums des Personenkraftwagens; und
- Fig. 11: eine schematische Darstellung einer an einer Instrumententafel des Personenkraftwagens gehaltenen Anzeige, auf welcher bei Erfülltsein wenigstens eines vorgebbaren Kriteriums jeweilige Positionen der Warnwesteneinrichtungen relativ zu dem Personenkraftwagen angezeigt werden.

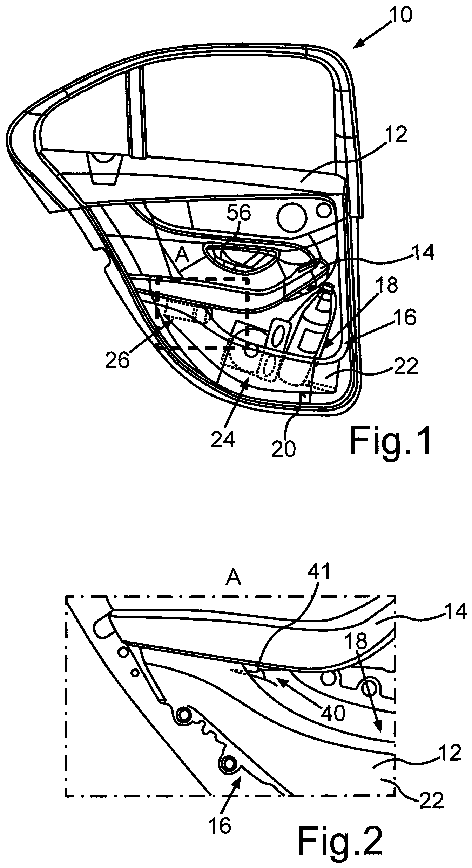

Fig. 1 zeigt eine hintere Seitentür 10 für einen Personenkraftwagen. Die Seitentür 10 umfasst ein Türinnenverkleidungsteil 12, mittels welchem ein Türrohbau der Seitentür 10 in Fahrzeugquerrichtung nach innen hin zumindest teilweise verkleidet ist. Das Türinnenverkleidungsteil 12 weist eine Armlehne 14 auf, auf die ein auf Seiten der Seitentür 10 sitzender Fahrzeuginsasse seinen Arm abstützen kann.

In Fahrzeughochrichtung unterhalb der Armlehne 14 ist ein Staufach 16 der Seitentür 10 vorgesehen, welches einen Stauraum 18 aufweist. Der Stauraum 18 ist dabei in Fahrzeughochrichtung nach unten durch einen Boden 20 und in Fahrzeugquerrichtung nach innen durch eine Seitenwand 22 des Staufachs 16 begrenzt. Im Stauraum 18 können Transportgegenstände 24 verstaut werden. Die Seitenwand 22 erstreckt sich dabei in Fahrzeuglängsrichtung von vorne unten nach hinten oben auf die Armlehne 14 zu.

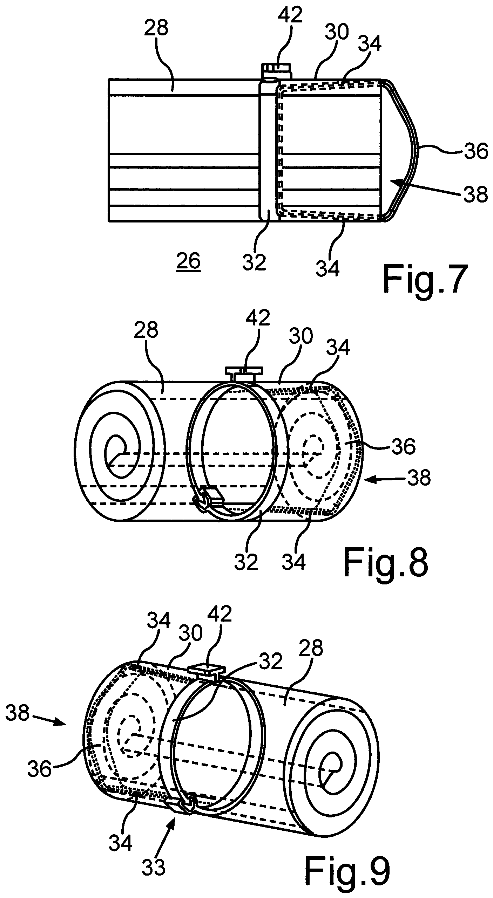

In einem in Fahrzeuglängsrichtung hinteren oberen Bereich der Seitenwand 22 ist eine den Fig. 7 bis 9 besonders gut zu erkennende Warnwesteneinrichtung 26 angeordnet, welche an der Seitentür 10 befestigt ist.

Die Warnwesteneinrichtung 26 umfasst dabei eine Warnweste 28 sowie ein Aufnahmeelement 30, welches vorliegend als Klammer ausgebildet und aus einem metallischen Werkstoff hergestellt ist. Das Aufnahmeelement 30 umgibt die Warnweste 28 lediglich teilweise, wodurch die Warnweste 28 in einem zusammengerollten und dadurch sehr stark kompaktierten Zustand gehalten ist. Durch das Zusammenrollen der Warnweste 28 weist die Warnweste 28 außenumfangsseitig zumindest im Wesentlichen die Form eines geraden Kreiszylinders mit einem Außendurchmesser auf. Das Aufnahmeelement 30 weist ein zumindest im Wesentlichen ringförmiges Aufnahmeteil 32 auf, in welchem der gerade Kreiszylinder bereichsweise aufgenommen ist.

Mit anderen Worten umgibt das Aufnahmeteil 32 den geraden Kreiszylinder in einem Teilbereich seiner Längserstreckung außenumfangsseitig in Umfangsrichtung vollständig. Von dem Aufnahmeteil 32 erstrecken sich in axialer Richtung des geraden Kreiszylinders bzw. des Aufnahmeteils 32 zwei in Umfangsrichtung voneinander beabstandete, weitere Aufnahmeteile 34 des Aufnahmeelements 30 weg, welche über eine Handhabe in Form eines Griffes 36 des Aufnahmeelements 30 miteinander verbunden sind. Der Griff 36 überdeckt dabei eine dem Griff 36 zugewandte Stirnseite 38 des geraden Kreiszylinders in axialer Richtung und ist von der Stirnseite 38 beabstandet, so dass der Griff 36 von einem Fahrzeuginsassen mit dessen Hand sehr gut und ergonomisch umgriffen werden kann. Der Griff 36 ist dabei in jeweiligen Endbereichen mit den jeweiligen Aufnahmeteilen 34 verbunden. Dazu kann der Griff 36 einstückig mit den Aufnahmeteilen 34 ausgebildet sein. Dabei kann das gesamte Aufnahmeelement 30 einstückig ausgebildet sein.

Durch das Zusammenrollen der Warnweste 28 kann eine Beschädigung und insbesondere ein Brechen der Warnweste 28 und insbesondere eine Beschädigung und ein Brechen von Reflexionsstreifen der Warnweste 28 vermieden werden.

Wünscht der Fahrzeuginsasse, die Warnweste 28 anzuziehen, so kann er diese auf einfache Weise aus dem Aufnahmeteil 32 weg von dem Griff 36 herausziehen. Um die Warnweste 28 auf einfache Weise wieder im Aufnahmeelement 30 anzuordnen, weist das Aufnahmeteil 32 freie Enden 33 auf, welche formschlüssig miteinander verbindbar sind und in ihrem formschlüssig miteinander verbundenen Zustand die Warnweste 28 zusammengerollt und somit kompaktiert halten. Um die Warnweste 28 wieder um Aufnahmeelement 30 anzuordnen, wird die formschlüssige Verbindung zwischen den freien Enden 33 aufgehoben, so dass die freien Enden 33 aufgrund von Elastizitäten der Aufnahmeteile 34 voneinander beabstandet werden können. Dadurch kann ein Innendurchmesser des Aufnahmeteils 32 gegenüber dem miteinander verbundenen Zustand der freien Enden 33 erweitert werden, so dass die Warnweste 28 auf einfache Weise im Aufnahmeteil 32 angeordnet werden kann. Mit anderen Worten ist das Aufnahmeteil 32 bzw. das Aufnahmeelement 30 öffenbar und wieder verschließbar.

Wie Fig. 1 zu entnehmen ist, ist die an der Seitentür 10 befestige Warnwesteneinrichtung 26 vom Fahrgastraum aus zugänglich und kann über den Griff 36 relativ zur Seitentür 10 bewegt werden. Der Griff 36 stellt somit eine Handhabe zur einfachen Handhabung der Warnwesteneinrichtung 26 dar.

Zur Realisierung einer festen und definierten Halterung und Ausrichtung der Warnwesteneinrichtung 26 an der Seitentür 10 ist eine Einrichtung zur Anordnung der Warnwesteneinrichtung 26 an der Seitentür 10 vorgesehen. Dabei ist an der Seitentür 10 und vorliegend an dem Türinnenverkleidungsteil 12 ein türseitiges, erstes Befestigungsmittel 40 angeordnet. Darüber hinaus ist ein aufnahmeelementseitiges, zweites Befestigungsmittel 42 an dem Aufnahmeelement 30 vorgesehen, wobei das zweite Befestigungsmittel 42 einstückig mit dem Aufnahmeelement 30 ausgebildet ist.

In Fig. 2 ist ein mit A bezeichneter Bereich der Seitentür 10 vergrößert dargestellt. Wie Fig. 2 zu entnehmen ist, weist das erste Befestigungsmittel 40 eine Führung 41 auf, in die das zweite Befestigungsmittel 42 in eine Einschubrichtung und vorliegend in Fahrzeuglängsrichtung nach hinten einschiebbar ist. Dadurch wirken die Befestigungsmittel 40, 42 formschlüssig zusammen, wodurch die Warnwesteneinrichtung 26 formschlüssig an der Seitentür 10 befestigbar bzw. befestigt ist.

Vorliegend weist das Befestigungsmittel 42 einen zumindest im Wesentlichen T-förmigen Querschnitt auf. Mit anderen Worten ist das Befestigungsmittel 42 als T-Stück ausgebildet und kann die Führung begrenzende Wandungen des Türinnenverkleidungsteils 12 in Fahrzeugquerrichtung hintergreifen und dadurch formschlüssig mit dem Befestigungsmittel 40 zusammenwirken.

Über den Griff 36 können die Befestigungsmittel 40, 42 besonders einfach und ergonomisch relativ zueinander bewegt und somit in und außer Wirkverbindung miteinander verbracht werden. Der Fahrzeuginsasse kann die Warnwesteneinrichtung über den Griff 36 auch bei schlechten Lichtverhältnissen ertasten. Damit der Fahrzeuginsasse die Warnwesteneinrichtung 26 auch bei schlechten Lichtverhältnissen erkennen kann, ist der Griff 36 beispielsweise mit einem Signalelement versehen. Bei dem Signalelement kann es sich um eine Farbe, insbesondere um eine fluoreszierende Farbe, oder um wenigstens ein elektrisches Leuchtelement handeln.

Wie in Fig. 2 erkennbar ist, verjüngt sich die Führung des Befestigungsmittels 40 in Einschubrichtung. Dadurch kann das Befestigungsmittel 42 in einem in Fahrzeuglängsrichtung vorderen Bereich der Führung zunächst vorpositioniert und anschließend in Einschubrichtung nach hinten geschoben werden. Dadurch, dass sich die Führung nach hinten verjüngt, wird die Warnwesteneinrichtung 26 unter Zusammenwirken der Befestigungsmittel 40, 42 in eine vorgebbare und definierte Verstauposition verbracht.

Diese Anordnung der Warnwesteneinrichtung 26 an der Seitentür 10 ist besonders vorteilhaft, da die Warnwesteneinrichtung 26 für einen auf Seiten der Seitentür 10 sitzenden Fahrzeuginsassen besonders ergonomisch vom Fahrgastraum aus zugänglich ist. Dazu greift der Fahrzeuginsasse beispielsweise mit seinem der Seitentür 10 fernen Arm, d.h. mit dem Arm, der auf einer der Seitentür 10 abgewandten Körperseite angeordnet ist, um sich selbst herum und kann die Warnwesteneinrichtung 26 besonders ergonomisch über den Griff 36 ergreifen.

Des Weiteren ermöglichen die Befestigungsmittel 40, 42 eine hängende Befestigung der Warnwesteneinrichtung 26 am Türinnenverkleidungsteil 12 in Fahrzeughochrichtung unterhalb der Armlehne 14, so dass zwar der Boden 20 des Staufachs 16 in Fahrzeughochrichtung nach oben teilweise von der Warnwesteneinrichtung 26 überdeckt ist, die Warnwesteneinrichtung 26 jedoch nicht auf dem Boden 20 aufliegt. Vielmehr ist die Warnwesteneinrichtung 26 in Fahrzeughochrichtung von dem Boden 20 nach oben hin beabstandet, so dass unterhalb der Warnwesteneinrichtung 26 Gegenstände im Staufach 16 angeordnet werden können. Dies bedeutet, dass die Warnwesteneinrichtung 26 Ablagemöglichen im Staufach 16 nicht beeinträchtigt.

Im an der Seitentür 10 befestigten Zustand wird die Warnwesteneinrichtung 26 größtenteils von der Seitenwand 22 in Fahrzeugquerrichtung nach innen überdeckt. Der Griff 36 jedoch überragt die Seitenwand 22 in Fahrzeuglängsrichtung nach vorne, so dass der Fahrzeuginsasse den Griff 36 komfortabel und ergonomisch umgreifen kann.

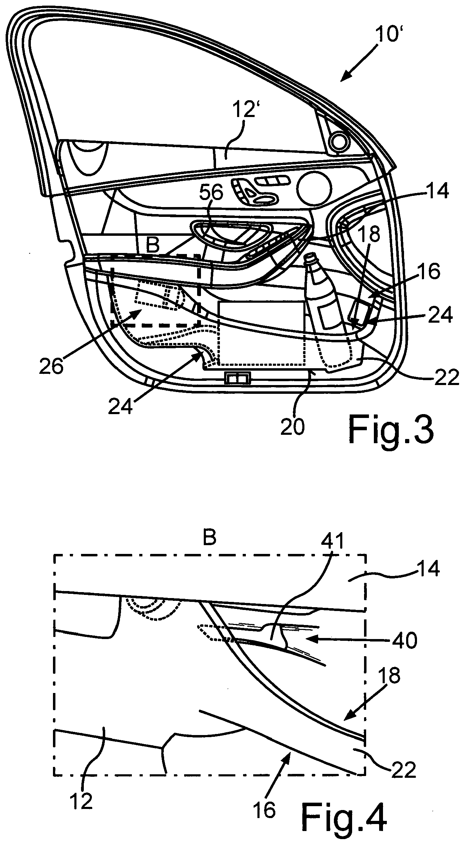

Fig. 3 und 4 zeigen eine vordere Seitentür 10' des Personenkraftwagens, welche ein Türinnenverkleidungsteil 12' umfasst. Auch der Seitentür 10' ist eine Einrichtung zur Anordnung einer Warnwesteneinrichtung 26 an der Seitentür 10' zugeordnet. Die Seitentür 10' mit dem Türinnenverkleidungsteil 12' unterscheidet sich nur sehr geringfügig von der Seitentür 10 mit dem Türinnenverkleidungsteil 12. Diese Unterschiede liegen insbesondere in der optischen Gestaltung. Hinsichtlich der Funktion und insbesondere hinsichtlich der Halterung der Warnwesteneinrichtung 26 an der Seitentür 10' sind sie im Wesentlichen gleich, so dass das zur Seitentür 10 mit dem Türinnenverkleidungsteil 12 Geschilderte ohne Weiteres auf die Seitentür 10' mit dem Türinnenverkleidungsteil 12' übertragen werden kann.

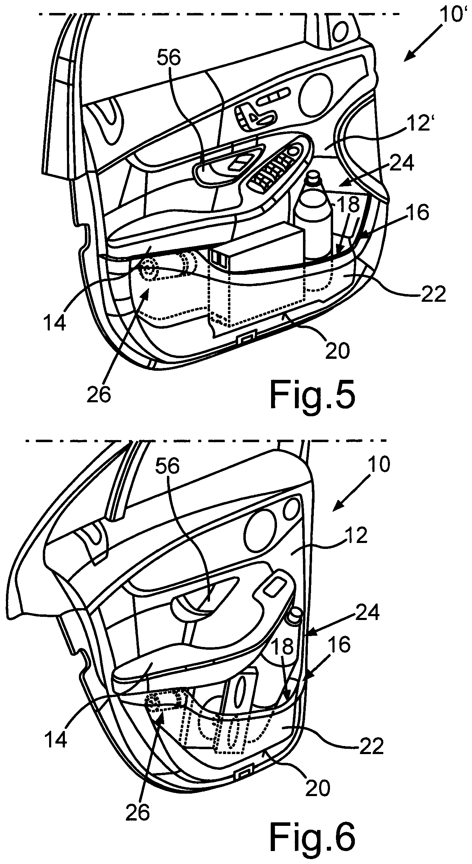

Fig. 4 zeigt einen mit B bezeichneten Bereich der Seitentür 10' in vergrößerter Darstellung, wobei das Befestigungsmittel 40 erkennbar ist. Das Befestigungsmittel 40 weist - wie zuvor geschildert - die Führung 41 auf, welche einen sich in Fahrzeuglängsrichtung nach hinten hin und somit in Einschubrichtung verjüngenden Querschnitt aufweist. In Fig. 5 und 6 sind die Seitentüren 10, 10' nochmals in perspektivischer Ansicht dargestellt.

Die Entnahme und Befestigung der Warnwesteneinrichtung 26 von bzw. an der Seitentür 10' erfolgt dabei zumindest im Wesentlichen auf die gleiche Weise wie bei der Seitentür 10, so dass eine standardisierte, formschlüssige und definierte Verbindung geschaffen ist. Dadurch können die Warnwesteneinrichtungen 26 sowohl an der Seitentür 10 als auch an der Seitentür 10' auf die zumindest im Wesentlichen gleiche Weise einfach aufgefunden, ergonomisch ergriffen und von der Seitentür 10, 10' gelöst sowie wieder an der Seitentür 10, 10' befestigt werden.

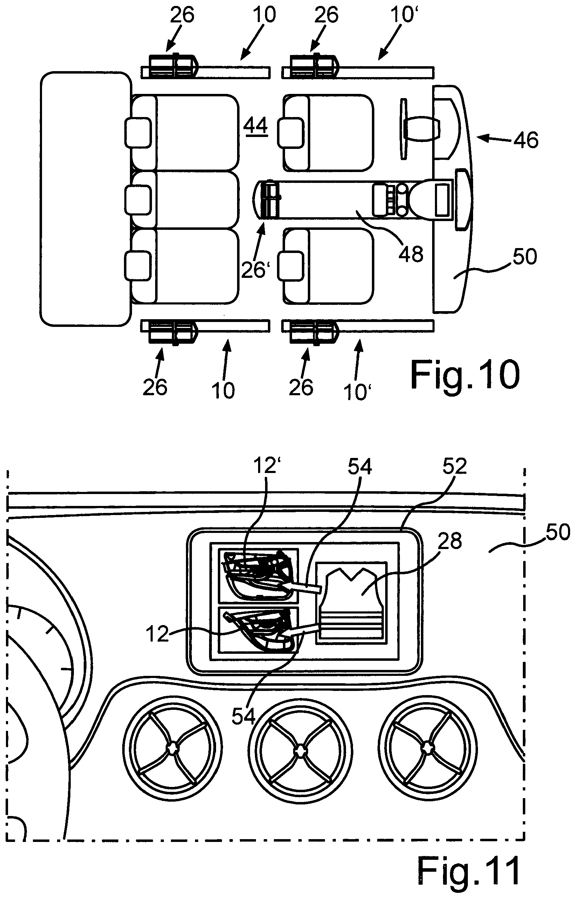

Fig. 10 zeigt den mit 44 bezeichneten Fahrgastraum des mit 46 bezeichneten Personenkraftwagens. Wie anhand von Fig. 10 erkennbar sind, sind an beiden hinteren Seitentüren 10 jeweilige Warnwesteneinrichtungen 26 auf die geschilderte Weise befestigt. Auch an den beiden vorderen Seitentüren 10' sind jeweilige Warnwesteneinrichtungen 26 auf die geschilderte Weise befestigt.

In Fig. 10 ist auch eine Mittelkonsole 48 erkennbar, an der eine weitere Warnwesteneinrichtung 26' mit einer Warnweste befestigt ist. Dadurch sind im Fahrgastraum 44, welcher für fünf Fahrzeuginsassen ausgelegt ist, fünf Warnwesteneinrichtungen 26, 26' vorgesehen, welche allesamt vom Fahrgastraum 44 aus zugänglich sind. Dadurch können alle Fahrzeuginsassen eine Warnweste anziehen, bevor sie den Fahrgastraum 44 verlassen.

Fig. 11 zeigt ausschnittsweise eine Instrumententafel 50 des Personenkraftwagens 46, an der eine Anzeige 52 im Fahrgastraum 44 gehalten ist. Der Anzeige 52 ist eine Steuerungseinrichtung des Personenkraftwagens 46 zugeordnet. Die Steuerungseinrichtung ist dabei dazu ausgelegt, bei Erfülltsein wenigstens eines vorgebbaren Kriteriums eine jeweilige Position wenigstens einer der Warnwesteneinrichtungen 26, 26' relativ zu dem Personenkraftwagen 46 anzuzeigen. Mit anderen Worten ist ein Verfahren zum Betreiben eines Personenkraftwagens 46 vorgesehen, bei welchem bei Erfülltsein des wenigstens einen Kriteriums die Position der Warnwesteneinrichtung 26 bzw. 26' relativ zum Personenkraftwagen 46 auf der Anzeige 52 dargestellt wird. Dadurch können die Fahrzeuginsassen mit einer Warnmeldung versorgt werden, welche die Fahrzeuginsassen dazu anleitet, vor Verlassen des Fahrgastraums 44 die Warnweste 28 anzulegen.

Vorliegend umfasst die Warnmeldung eine schematische Darstellung der Warnweste 28 auf der Anzeige 52 sowie schematische Darstellungen der Türinnenverkleidungsteile 12, 12', wobei mittels jeweiliger Pfeile 54 die jeweiligen Positionen der Warnwesteneinrichtungen 26 an den jeweiligen Türinnenverkleidungsteilen 12, 12' veranschaulicht. ist.

Das Kriterium, bei dessen Erfülltsein die Warnmeldung auf der Anzeige 52 angezeigt wird, umfasst beispielsweise die Bedingung, dass die Fahrzeuggeschwindigkeit des Personenkraftwagens 46 geringer ist als ein vorgebbarer Schwellenwert. Vorzugsweise wird die Warnmeldung angezeigt, wenn das Kriterium die Bedingung umfasst, dass der Personenkraftwagen 46 still steht.

Alternativ oder zusätzlich umfasst das Kriterium eine Aktivierung einer Warnblinklichteinrichtung des Personenkraftwagens 46 und/oder eine Betätigung eines Seitentürinnengriffs 56 der Seitentür 10 bzw. 10', über welchen die Seitentüren 10, 10' zu öffnen sind. Mit anderen Worten wird die Position der Warnwesteneinrichtung 26 bzw. 26' relativ zum Personenkraftwagen 46 auf der Anzeige 52 angezeigt, wenn der Personenkraftwagen 46 stillsteht und/oder die Warnblinklichteinrichtung aktiviert ist und/oder wenigstens einer der Seitentürinnengriffe 56 betätigt wird.

## Patentansprüche

1. Seitentür (10, 10') eines Kraftwagens (46) mit einer Einrichtung zur Anordnung einer Warnwesteneinrichtung (26) und einem Aufnahmeelement (30) zur wenigstens bereichsweisen Aufnahme einer Warnweste (28),
**dadurch gekennzeichnet, dass**:
- an der Seitentür (10, 10') wenigstens ein türseitiges erstes Befestigungsmittel (40) vorgesehen ist,
- an dem Aufnahmeelement (30) wenigstens ein aufnahmeelementseitiges zweites Befestigungsmittel (42) vorgesehen ist,
- die Warnwesteneinrichtung (26) durch die miteinander zusammenwirkenden Befestigungsmittel (40, 42) formschlüssig an der Seitentür (10, 10') befestigbar ist,
- an dem Aufnahmeelement (30) wenigstens eine Handhabe (36) angeordnet ist, mittels welcher das aufnahmeelementseitige zweite Befestigungsmittel (40) relativ zum türseitigen ersten Befestigungsmittel (42) in und außer Wirkverbindung mit diesem bewegbar ist, und
- das Aufnahmeelement (30) ein zumindest im Wesentlichen ringförmiges Aufnahmeteil (32) zur bereichsweisen Aufnahme der Warnweste (28) im kompaktierten, insbesondere zusammengerollten, Zustand aufweist.

2. Seitentür nach Anspruch 1,
**dadurch gekennzeichnet, dass**
eines der Befestigungsmittel (40, 42) eine Führung (41) aufweist, in welche das andere Befestigungsmittel (42) in eine Einschubrichtung einschiebbar ist.

3. Seitentür nach Anspruch 1 oder 2,
**dadurch gekennzeichnet, dass**
die wenigstens eine Handhabe (36) als Griff gebildet ist.

4. Seitentür nach Anspruch 3,
**dadurch gekennzeichnet, dass**
sich von dem Aufnahmeteil (32) weg in axialer Richtung des Aufnahmeelements (30) zwei weitere Aufnahmeteile (34) erstrecken, welche über den Griff miteinander verbunden sind.

5. Seitentür nach einem der vorhergehenden Ansprüche,
**dadurch gekennzeichnet, dass** das Aufnahmeteil (32) freie Enden (33) aufweist,
welche formschlüssig miteinander verbindbar sind zum Halten der Warnweste (28) im kompaktierten Zustand.

6. Seitentür nach Anspruch 4 und 5,
**dadurch gekennzeichnet, dass**
die freien Enden (33) aufgrund von Elastizitäten der Aufnahmeteile (34) voneinander beabstandbar sind.

## Claims

1. Side door (10, 10') of a motor vehicle (46), comprising a facility for arranging a reflective vest device (26) and a reception element (30) for the at least partial accommodation of a reflective vest (28), **characterised in that**:
- at least one door-side first fastening means (40) is provided on the side door (10, 10'),
- at least one reception-side second fastening means (42) is provided on the reception element (30),
- the reflective vest device (26) can be positively secured to the side door (10, 10') by the interacting fastening means (40, 42),
- at least one handling facility (36) is provided on the reception element (30), by means of which handling facility (36) the reception-side second fastening means (42) can be brought into and out of operative connection with the door-side first fastening means (40) and moved together therewith, and
- the reception element (30) has an at least substantially annular reception part (32) for the partial accommodation of the reflective vest (28) in its compacted, in particular rolled-up, state.

2. Side door according to claim 1,
**characterised in that**
one of the fastening means (40, 42) has a guide (41), into which the other fastening means (42) can be inserted in an insertion direction.

3. Side door according to claim 1 or 2,
**characterised in that**
the at least one handling facility (36) is designed as a handle.

4. Side door according to claim 3,
**characterised in that** two further reception parts (34) joined to one another via the handle extend away from the reception part (32) in the axial direction of the reception element (30).

5. Side door according to any of the preceding claims,
**characterised in that**
the reception part (32) has free ends (33), which can be positively joined to one another for holding the reflective vest (28) in its compacted state.

6. Side door according to claims 4 and 5,
**characterised in that**
the free ends (33) are distanced from one another owing to elasticities of the reception parts (34).

## Revendications

1. Porte latérale (10, 10') d'un véhicule automobile (46) comprenant un dispositif destiné à loger un gilet de sécurité (26) et un élément de logement (30) destiné à au moins à certains endroits de loger un gilet de sécurité (28), **caractérisée en ce que** :
- sur la porte latérale (10, 10') est prévu au moins un premier moyen de fixation (40) côté porte,
- sur l'élément de réception (30) est prévu au moins un second moyen de fixation (42) côté élément de logement,
- le gilet de sécurité (26) peut être fixé par les moyens de fixation (40, 42) coopérant l'un avec l'autre par complémentarité de forme sur la porte latérale (10, 10'),
- sur l'élément de logement (30) est disposé au moins un élément de commande (36) à l'aide duquel le second moyen de fixation (40) côté élément de logement peut se déplacer par rapport au premier moyen de fixation (42) côté porte en liaison fonctionnelle ou non avec ce dernier, et
- l'élément de logement (30) présente une partie de logement (32) au moins essentiellement annulaire destinée à loger partiellement le gilet de sécurité (28) dans un état compact, en particulier dans un état roulé.

2. Porte latérale selon la revendication 1, **caractérisée en ce que** l'un des moyens de fixation (40, 42) présente un guide (41) dans lequel l'autre moyen de fixation (42) peut coulisser dans une direction d'insertion.

3. Porte latérale selon la revendication 1 ou la revendication 2, **caractérisée en ce que** ledit élément de commande (36) est conçu comme une poignée.

4. Porte latérale selon la revendication 3, **caractérisée en ce que** deux autres parties de logement (34) s'étendent à partir de la partie de logement (32) dans la direction axiale de l'élément de logement (30), lesdites deux autres parties de logement étant reliées ensemble par la poignée.

5. Porte latérale selon l'une quelconque des revendications précédentes, **caractérisée en ce que** la partie de logement (32) présente des extrémités libres (33) qui peuvent se relier ensemble par complémentarité de forme pour maintenir le gilet de sécurité (28) dans un état compact.

6. Porte latérale selon la revendication 4 et la revendication 5, **caractérisée en ce que** les extrémités libres (33) sont espacées l'une de l'autre en raison de l'élasticité de la partie de logement (34).
